Europäisches Patentamt

European Patent Office

Office européen des brevets

(11) Publication number: **0 155 114**
**B1**

(12)                     **EUROPEAN PATENT SPECIFICATION**

(45) Date of publication of patent specification: **02.05.90**

(51) Int. Cl.⁵: **B 62 M 3/08**

(21) Application number: **85301315.9**

(22) Date of filing: **27.02.85**

(54) **Bicycle pedalling apparatus.**

(30) Priority: **27.02.84 US 583890**
**19.02.85 US 701311**

(43) Date of publication of application:
**18.09.85 Bulletin 85/38**

(45) Publication of the grant of the patent:
**02.05.90 Bulletin 90/18**

(84) Designated Contracting States:
**AT BE CH DE FR GB IT LI LU NL SE**

(56) References cited:
**EP-A-0 015 803**
**DE-A-2 739 207**
**DE-A-3 149 345**
**FR-A-2 087 920**
**US-A-3 869 136**

(73) Proprietor: **Howell, Richard J.**
**20 Canal Street**
**Winooski Vermont 05405 (US)**

(72) Inventor: **Howell, Richard J.**
**20 Canal Street**
**Winooski Vermont 05405 (US)**

(74) Representative: **Slight, Geoffrey Charles et al**
**Graham Watt & Co. Riverhead**
**Sevenoaks Kent TN13 2BN (GB)**

## Description

## Background of the Invention

This invention relates to pedalling systems for bicycles, exercise cycles and like pedalled mechanisms. More particularly, the invention provides a pedalling apparatus that fastens a cyclist's shoe to a pedal securely for all pedal strokes. The pedalling system releases the shoe from the pedal readily upon an untoward, non-pedalling movement. Further, a cyclist can intentionally couple the shoe to the pedal, and release from the pedal, easily and essentially instantaneously. Both the coupling and releasing actions are accomplished without requiring the cyclist to remove a hand from the handlebar. The invention is described, for sake of clarity, with reference to bicycle pedalling equipment, and is applicable to other pedal-driven mechanisms.

The common bicycle pedal is driven only on a downstroke by the down thrust of a cyclist's foot. The addition of toe straps and like harnesses on a pedal, to engage the cyclist's shoe, enables an upward thrust also to propel the cycle. The addition of cleats allows the cyclist to provide ankling action, in which a combination of upward and rearward forces further enhances pedalling efficiency. The inconvenience and accident hazard of toe straps and cleats have lead to other devices for fastening a cyclist's shoe to a pedal, as DE-3,149,345 illustrates. Thus according to this prior disclosure, pedalling apparatus for releasably and replaceably coupling a rider's foot to a pedal arranged to revolve about a pedal axis in response to pedalling loads has latch means with first and second latch members directed along a latch axis, at least one said latch member being resiliently biased relative to the other along said latch axis, and latch receiving means arranged for wearing on a rider's foot and having first and second latch seats for coupling said latch members against the action of said resilient bias and for releasing said latch members against the action of said resilient bias upon twisting of the latch receiving means.

There is still need, however, for pedalling apparatus which is safe, convenient, reliable and simple.

Proceeding from the prior disclosure of DE-3,149,345 above, the present invention is characterised in that the latch means projects upwardly on the upper side of said pedal, in that said latch seats are formed in a latch means receiving socket recess recessed into a sole of the rider's foot apparel, in that said latch axis is longitudinal with said pedal axis, and in that said latch seats are adapted releasably to couple said latch members against the action of said resilient bias whereby said latch receiving means resists unseating of said latch means coupled therewith and transmits thereto a cycling thrust in response to said pedalling loads, and said latch means unseats resiliently from said latch receiving means in response to selected non-pedalling upward and rearward loads, including such loads as are intentionally selected by the rider, as well as to said twisting of the latch receiving means.

The present invention also comprehends cycling apparatus for releasably and replaceably coupling a cyclist's foot to a latching pedal that revolves about a normally-horizontal pedal axis and that has latch means with first and second latch members directed along a latch axis, at least one said latch member being resiliently biased relative to the other along said latch axis, said apparatus comprising latch receiving means with first and second latch seats for couplingly seating said latch members against the action of said resilient bias and for releasing said latch members against the action of said resilient bias upon twisting of the latch receiving means characterised in that said latch seats are axially aligned with a latch axis longitudinal with the pedal axis, in that said latch seats are formed in a latch means-receiving socket recessed into a sole portion of a cyclist's foot apparel, and in that said latch seats are adapted releasably to couple said latch members against the action of said resilient bias whereby said latch receiving means resists unseating of said latch means coupled therewith and transmits thereto a cycling thrust in response to said pedalling loads, and said latch means unseats resiliently from said latch receiving means in response to selected non-pedalling upward and rearward loads, including such loads as are intentionally selected by the cyclist, as well as to said twisting of the latch receiving means.

The present invention still further comprehends cycling pedal apparatus for releasably and replaceably coupling a cycle pedal to a cyclist's foot carried socket element having latch receiving means with first and second latch seats, said pedal being arranged to revolve about a normally-horizontal pedal axis, said apparatus comprising latch means with first and second latch members directed along a latch axis, at least one said latch member being resiliently biased relative to the other along said latch axis to couplingly seat said latch members in said latch seats against the action of said resilient bias and to resiliently release said latch members against the actions of said resilient bias upon twisting of the latch receiving means characterised in that said latch means projects upwardly on the upper side of the pedal with said latch axis longitudinal with said pedal axis, whereby said latch members couple with said foot carried element to transmit cycling thrust in response to pedalling loads and unseat resiliently from said foot carried element in response to selected non-pedalling upward and rearward loads, including such loads as are intentionally selected by the cyclist, as well as to said twisting of the latch receiving means.

The forces and movements of a foot which are involved in pedalling can have up to six degrees of action. A vertical downward force of a rider's foot on a pedal is perhaps the most common action. A rider using the prior toe straps in addition can apply a vertical upward force. Toe straps also transfer a longitudinal forward force to the pedal, and the prior cleat transfers a longitudinal backward force. A third possible action is a lateral or sideways force, which contributes little to pedalling. The remaining three actions are rotational movements which a rider's foot can undergo. Twist is rotation about a vertical axis and roll is rotation about a longitudinal axis. Bend is rotation about a lateral axis, which is the axis that extends parallel to the axis about which a pedal revolves. Pedalling desirably involves vertical and longitudinal forces, typically with a different magnitude for each direction, i.e. up, down, forward, and backward. The rider's foot in addition may bend during a full pedalling stroke, and may twist and/or roll slightly.

One problem with toe straps and the like is that the pedalling apparatus must often be clinched by hand; the cyclist must let go of the handlebar in order to actuate engagement. The removal of the cyclist's hands from the handlebar can sometimes contribute to accidents.

This invention provides a pedal-shoe fastening apparatus that engages readily, that maintains positive retention for all pedalling strokes, and that releases readily in response to different non-pedalling foot movements and loads, both intentional and accidental. The pedalling apparatus of this invention can be coupled and released without manual effort.

The cycle pedalling apparatus of the present invention is convenient, reliable, and safe to use. Furthermore, the apparatus is capable of providing high performance cycling.

A pedalling mechanism is disclosed which accommodates certain levels of vertical and longitudinal forces, and of bend, twist, and roll. The mechanism, however, releases the rider's foot under excessive levels of such forces and movements, other than vertically down and longitudinally forward. The release action responds to different levels of the different pedalling actions and can react to cross-coupled (e.g. twist-roll, twist-vertical) loadings as well. The mechanism withstands the vertically upward force useful in pedalling, and withstands the pedalling level of longitudinally backward force, but releases when either force or a combination force exceeds preprogrammed levels. Similarly, rotational movements in excess of those desired for pedalling or safe for the rider are to cause release. The pedalling mechanism according to the invention meets these potentially conflicting requirements for secure coupling and reliable release, at different levels for different actions. The mechanism may be designed to release the cyclist when riding limits are exceeded and well below the biomechanical limits that would cause injuries. The mechanism functions equally well for novices and experts and is relatively independent of the cyclist's strength.

More particularly, the present invention resides in a pedalling apparatus for releasably and replacably coupling a rider's foot to a bicycle crank that carries at least one pedal, revolvable about a normally-horizontal pedal axis. The apparatus includes a latch element projecting from the pedal and a socket element adapted for wearing on a rider's foot. In the illustrated embodiments the latch element has a pair of aligned latch members. At least one latch member is resiliently biased relative to the other one, along a latch axis oriented longitudinal with the pedal axis. The two latch members preferably are directed approximately along the latch axis, and are both resiliently biased. Additionally, the socket element in the illustrated embodiments has a latch-receiving recess with first and second latch seats which releasably and replacably couples with the latch members. The resilient latching bias resists release of the latch element from the socket element. In use, the coupled latch and socket elements transmit a cycling thrust to the pedal in response to downstroke forces exerted by the rider, and in response to upstroke and backstroke forces, which together are termed ankling forces. Further, the apparatus provides a breakaway action, in which the latch element unseats from the socket element in response to accidental, trauma-producing forces and moments, and in response to other selected, non-pedalling rider movements.

In a preferred embodiment, the socket recess is disposed in the sole of a cycling shoe and has a seat portion which receives and couples to the latch element. The recess also has a front guiding portion extending forward of the seat portion for guiding the latch element into and out of the seat portion.

The front guiding portion has a downwardly facing and longitudinally extending ramp. The ramp provides the recess with progressive depth within the socket element as the ramp extends backwardly toward the seat portion. The socket recess also has inwardly-facing flairing sidewalls extending outward and forward along the front guiding portion for providing the recess with increasing longitudinal width forward of the seat portion. Additionally, the side walls of the seat portion can be tilted or otherwise angled in the longitudinal and vertical directions to further control the ratios of twist release torque to vertical release force and of backward shear release force to roll release torque in order to optimize overall safety and control.

The latch element has a forward thrust-receiving surface disposed along the latch axis with the latch members. The socket recess has a back wall portion rearward of the seat portion. The wall portion abuts the forward thrust-receiving surface of the latch element when the latch element is seated in the socket element.

In one preferred embodiment, the latch members are lateral spring-compressed plungers; in another, the members are resilient rods. A further optional feature is that each latch seat has an inner detent arranged to seat an outwardly biased latch member, and has an outer detent that is off-center from the inner detent. The outer detent is arranged to seat a latch member with a lesser resilient bias than an inner detent.

Other preferred features of the invention include a resiliency-adjusting mechanism for adjusting the resilient bias of the latch members, and a pivotal attachment mechanism for adjustably attaching the latch element to the pedal with a selective orientation of the latch axis relative to the pedal axis. The latch-axis orientation can be adjusted with two degrees of freedom, to match a rider's foot. Additionally, the pedal surface can be formed from a replaceable, low-friction material, typically a polymeric material, to enhance the consistency and unformity of the release operation, with minimal dependence on foot pressure against the pedal. Further, the latch element can be coupled to the pedal via bearings that allow a limited amount of rotation (twist) therebetween to reduce stresses on the rider's knees.

As will be apparent from the description below, pedalling apparatus having a latch element and a socket element according to this invention provides efficient coupling, thereby reducing energy dissipation. The apparatus is simple and inexpensive to manufacture, is light in weight, is safe, efficient and easy to use, and is non-obtrusive and non-interfering during walking, or during pedalling activities when its use is not desired.

Pedalling apparatus according to the invention thus features a latch element that releasably and replaceably couples with a socket element. The latch action is with resilient bias and is along a latch axis that is directed longitudinally with the axis about which the pedal revolves. The latch action normally is effectively insensitive to, and remains coupled under, a forward foot thrust and under a downward foot thrust, in directions that are relative to the pedal. The latch action releases under selected non-pedalling levels of other forces, and of torques and moments about axes other than the pedal axis. Removal of the shoe from the pedal, i.e. release of the latch action with uncoupling of the latch element from the socket element, is automatic and essentially instantaneous, as with an intentional twisting action of the foot. The cyclist need not remove his or her hands from the handlebar in order to release the mechanism. Further, the latch and socket elements can immediately be re-coupled, without any re-setting or other preparation and again without manual efforts. The illustrations of the invention described in detail below also include embodiments wherein the force of the resilient bias can readily be adjustable, for example to accommodate different riding needs, and the orientation of the latch axis, relative to the pedal axis, can readily be adjustable with at least one or two degrees of freedom.

Among modifications which can be made in practicing the invention is the provision of a socket element separate from a rider's shoe. For example, a socket element as described above can be provided as a device separate from a shoe and which a rider can fasten to the underside of a shoe, suitably by way of straps or flexible clips. Similarly, latch elements are disclosed which can be adapted to conventional pedals. Further, when the socket element is incorporated into a shoe, it can be part of a multi-piece molded sole that has at least one flexible sole material, to enhance walking comfort, and a more dense socket material, to enhance force transfer and durability against stresses of the latch members. The latch element can also employ a disk and bearings which provide an adjustable orientation of the latch element about the vertical twist axis, and further which can either allow limited rotational slippage or be selectively locked to provide a stiff connection. In addition, the latch element can take the form of a one-piece pedal and latch block.

Some ways of carrying out the present invention will now be described in detail by way of example with reference to drawings which show specific embodiments.

In the drawings:

Figure 1 is a perspective view of pedalling apparatus embodying the invention, shown in an uncoupled condition;

Figure 2 is an exploded perspective view of the latch element of the pedalling apparatus shown in Figure 1;

Figure 3 is a cross-sectional end view of the pedalling apparatus of Figure 1, shown in coupled condition;

Figures 4A and 4B are bottom and end views, respectively, of a socket element in the sole of the bicycling shoe showing the latch element in phantom;

Figures 5A and 5B are transverse sectional views of the socket element of Figure 4 showing the two stages of seating of a latch element, in accordance with a preferred feature of the invention;

Figures 6A-6D are simplified showings of different coupling and release actions of the latch and socket elements of Figure 1, i.e.

Figure 6A shows response to longitudinal forces,

Figure 6B shows response to twist torques,

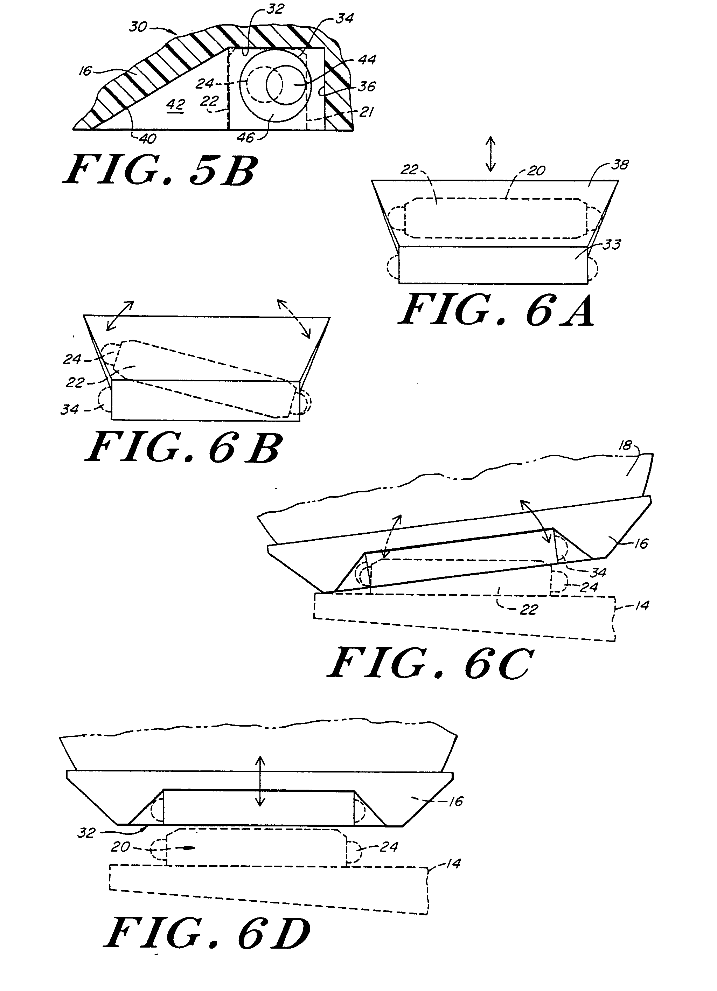

Figure 6C shows response to roll moments, and

Figure 6D shows response to vertical forces;

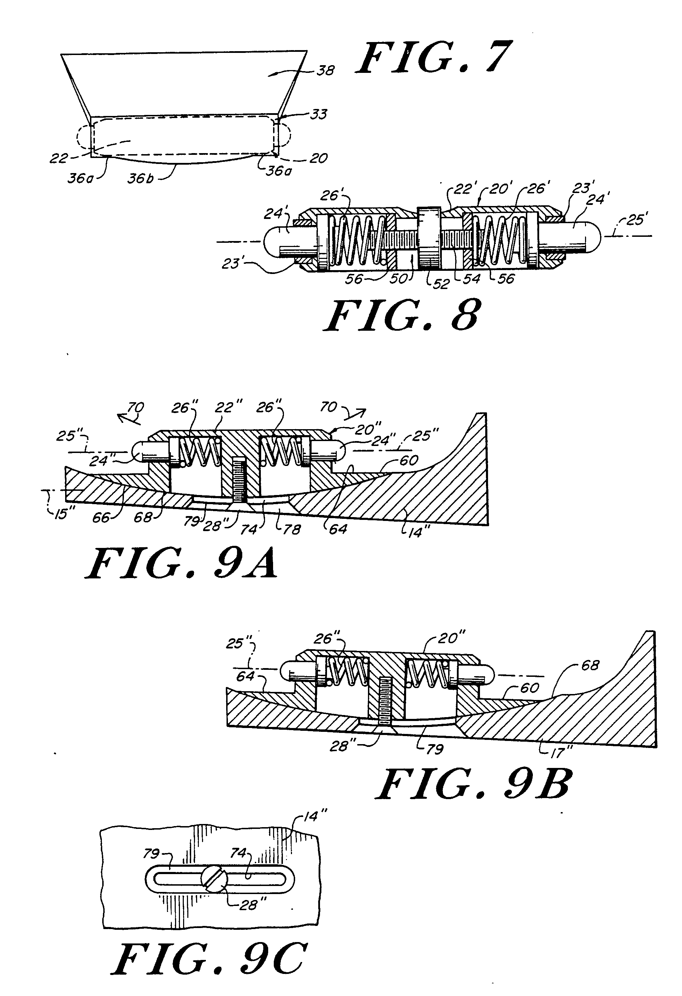

Figure 7 is a simplified view like Figure 6A showing the latch element fully seated in the socket element;

Figure 8 is a cross-sectional view of another latch element according to the invention and having a resiliency adjusting mechanism and latch member-guiding bushings;

Figure 9A is a cross-sectional view of another latch element mounted on a pedal according to a further embodiment that has an adjustable mounting mechanism;

Figure 9B is a view like Figure 9A showing the latch element with an adjustable cant;

Figure 9C is a detail bottom plan view of the embodiment of Figure 9A;

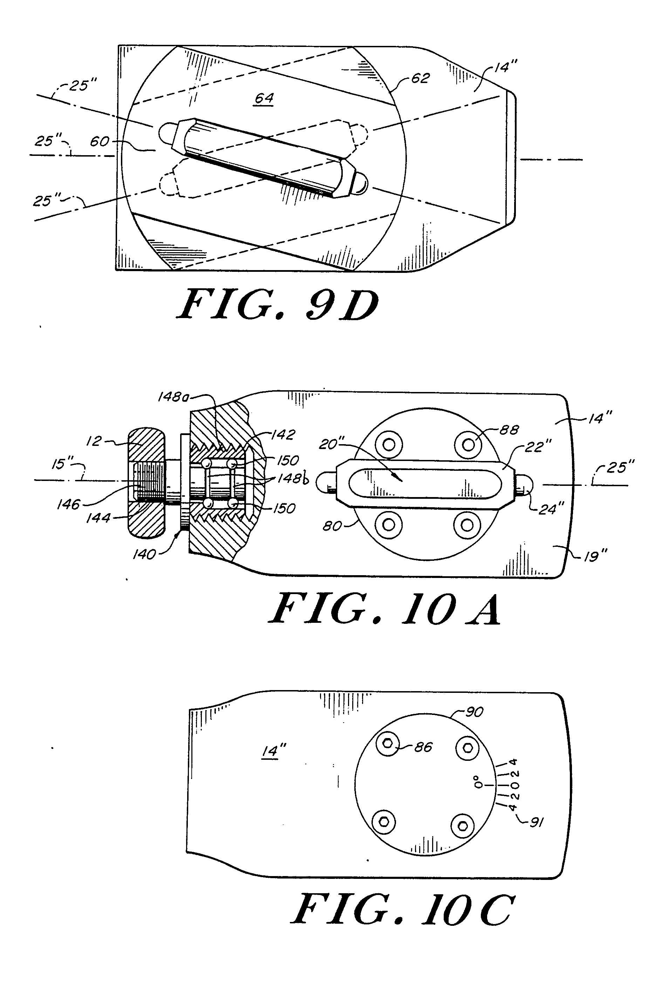

Figure 9D is a top plan view of the pedal shown in Figure 9A, showing the latch element, in bold and in phantom, oriented along different latch axes;

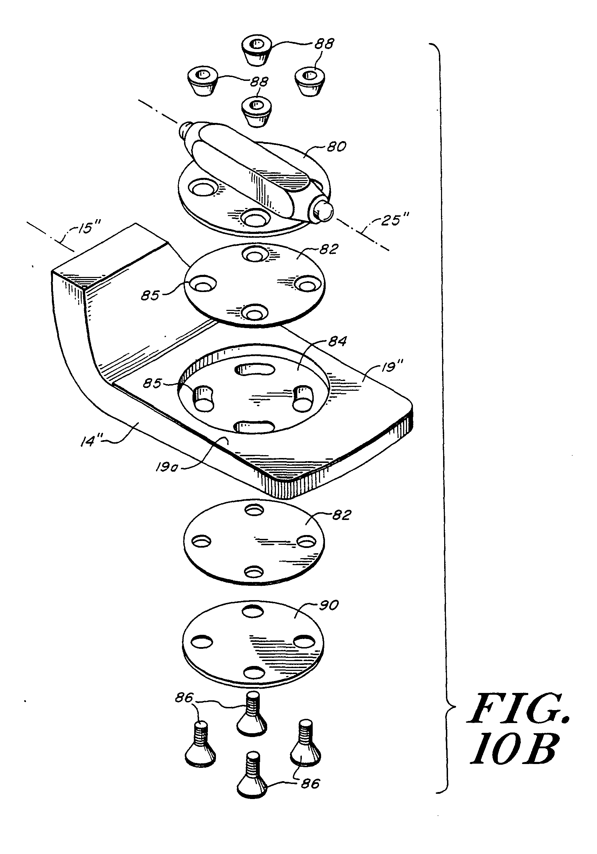

Figure 10A is a top plan view of another latch element mounted on a pedal according to the invention which permits limited rotation slippage or adjustable and lockable latch axis orientation;

Figure 10B is an exploded perspective view of the latch element and pedal of the embodiment shown in Figure 10A;

Figure 10C is a bottom plan view of the latch element of Figure 10A;

Figure 11 is a cross-sectional view of a further embodiment of pedalling apparatus according to the invention and in which the latch members include resilient rods; the phantom showing illustrates the resilient flex of the rods;

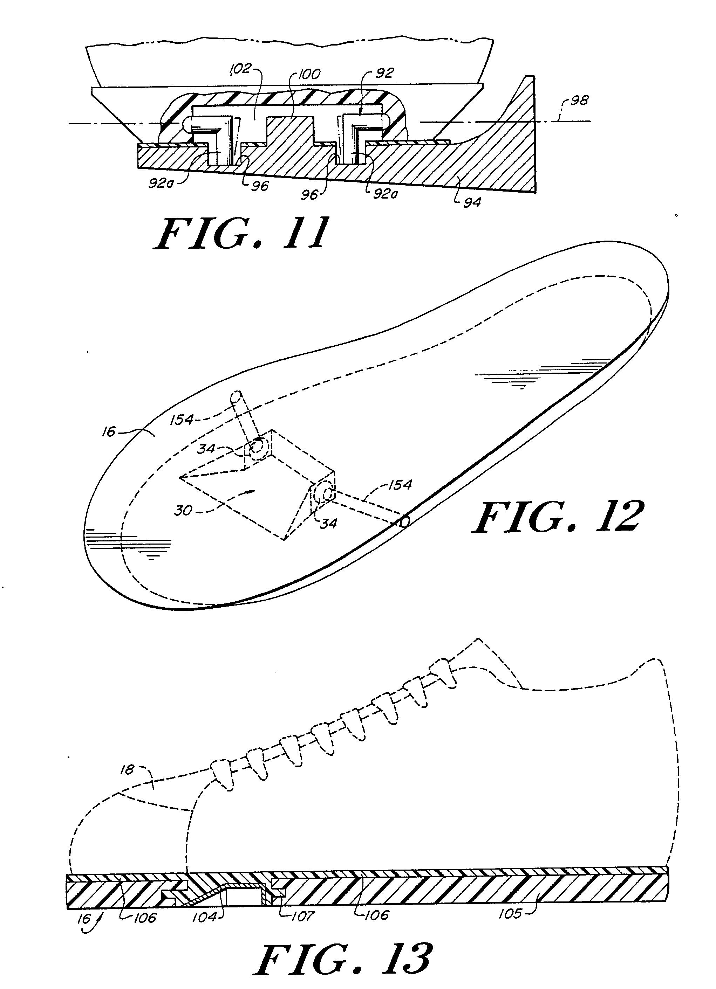

Figure 12 is a perspective view of a shoe sole according to the invention, showing a socket element and debris-removing ports in phantom;

Figure 13 is a side plan view of a two-piece shoe sole, incorporating a socket element according to the invention;

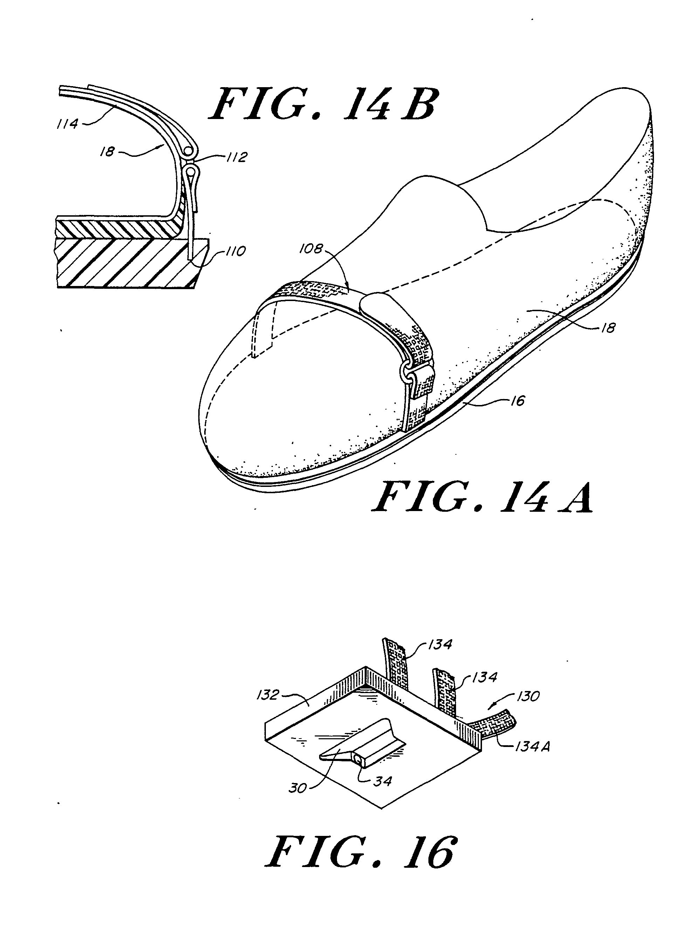

Figure 14A is a perspective view of a bicycling shoe according to the invention, incorporating shoe-cinching strap;

Figure 14B is a partial cross-sectional end view of the shoe of Figure 14A;

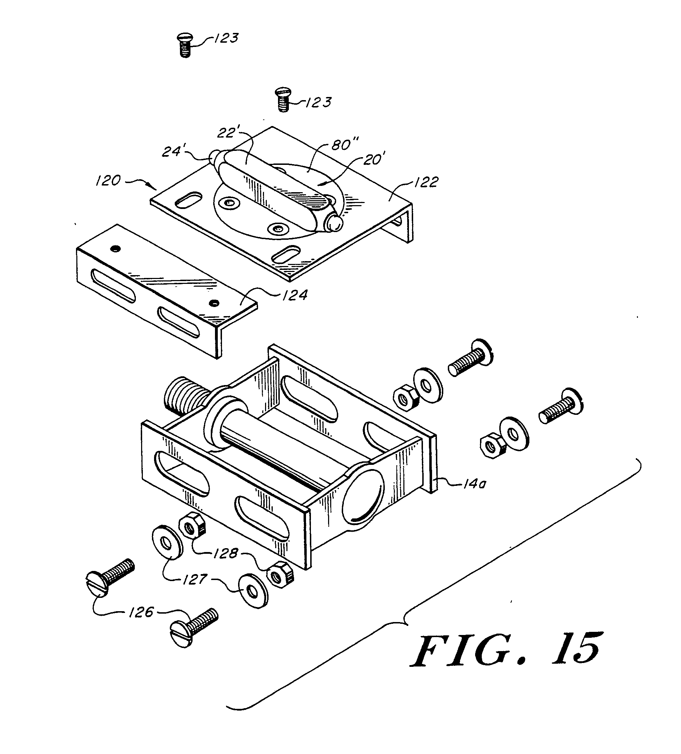

Figure 15 is an exploded perspective view of a latch apparatus according to the invention which is adapted for mounting on a conventional pedal.

Figure 16 is a perspective view of a socket-containing block according to invention which is adapted for connection to a conventional shoe.

Detailed Description

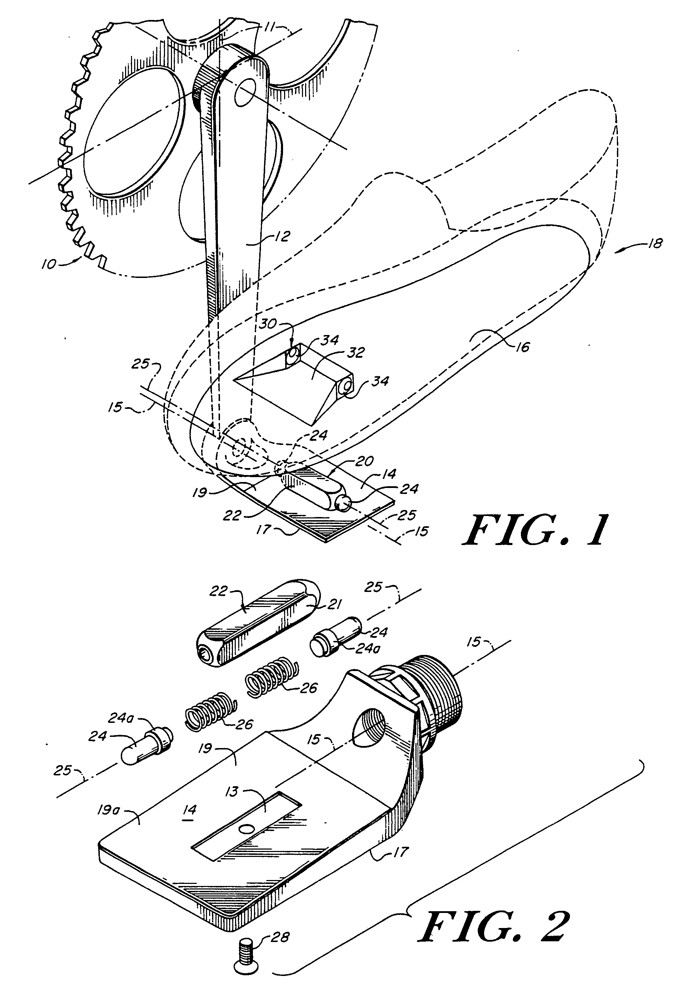

As shown in Figure 1, a bicycle, a portion of which is generally designated 10, has a crank 12 that carries at least one pedal 14. The crank 12 is shown coplanar with a normally vertical plane 11. The pedal is mounted to revolve about a normally-horizontal pedal axis 15 in response to stroke forces exerted by a rider of the bicycle.

Pedal 14 is generally flat on one side, having a planar surface 17, and has a latch element 20 projecting outwardly from the other side 19. The pedal typically is weighted to revolve normally to an orientation in which planar surface 17 faces downwardly and latch element 20 faces upwardly. (The opposite bias can also be used, as well as a balanced weighting.) The upwardly facing latch element meets a socket element 30 worn on the bicycle rider's foot. The socket element is arranged to engage the latch element 20 for releasably and replaceably coupling the rider's foot to the pedal 14. When the elements are thus engaged, the sole 16 of the rider's shoe 18 generally abuts the pedal surface 19 adjacent the latch element.

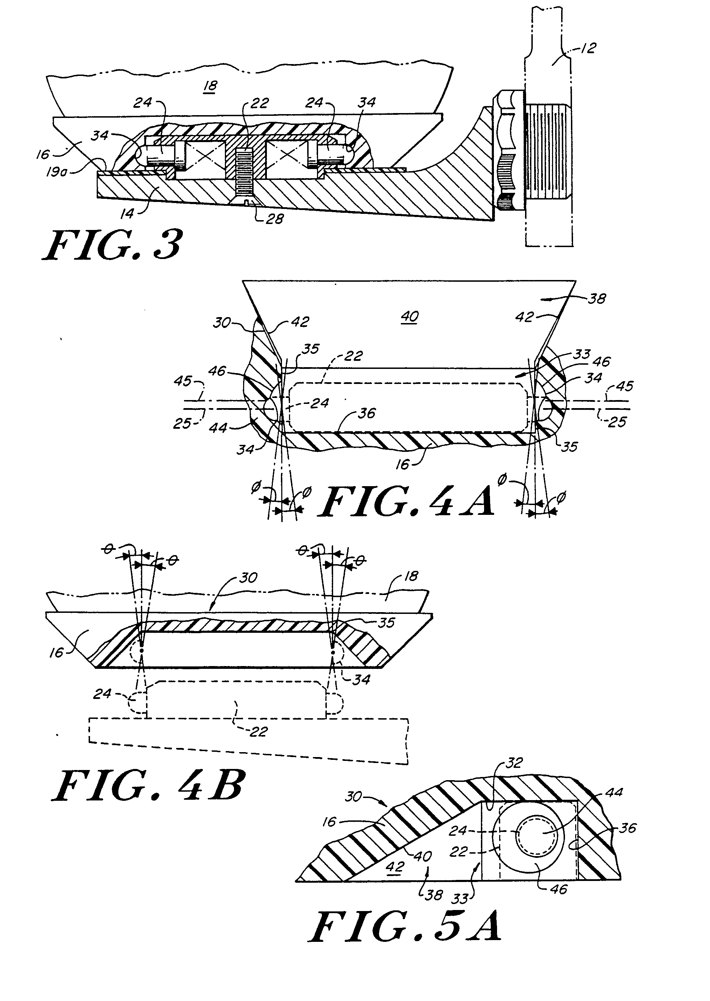

The illustrated latch element 20, as shown in Figures 2 and 3, mountingly seats in a recess 13 in pedal surface 19 and is fastened to the pedal 14 by screw 28, which is recessed into planar surface 17. The latch element 20 has an upwardly projecting block 22, elongated along a latch axis 25. The latch block has a flat back wall that projects upwardly from the pedal, transversely to the pedal surface 19. This wall forms a forward thrust surface 21 for transferring forward thrust from the rider to the pedal. Block 22 has internal cavities that mountingly seat first and second plunger-like latch members 24, 24. The latch members are oppositely directed and aligned along the latch axis 25, and project outward, along the latch axis, from both ends of the latch block. The axis 25 is longitudinal with the pedal axis 15 and, in the embodiment of Figures 1-3, is parallel with the pedal axis. The cavities within latch block 22 also seat compression springs 26, 26 that resiliently bias each latch member outward, away from one another, along the latch axis 25. An annular shoulder 24a on each latch member limits its outward projection from the latch block.

The illustrated socket element 30, shown in Figures 4A-B and 5A-B, is disposed within and forms part of the sole 16 of a bicycling shoe 18. The socket element 30 has a latch-receiving recess 32 having opposed first and second latch seats 34, 34. The latch seats are arranged for releasably and replaceably coupling the opposed latch members 24 against the action of the resilient bias of the latch springs 26.

Figures 4A-B and 5A-B show an embodiment wherein each latch seat 34 is preferably structured to provide a two-stage latching action. For this purpose, each latch seat 34 has an inner major detent 46 offset from the latch axis 25. The two opposed major detents 46-46, aligned along a recess axis 45, seat the latch members 24-24 with a slight amount of resilient or elastic lateral freedom, as Figure 5B shows. Each detent 46 is further recessed with a minor detent 44 centered on the latch axis 25. The aligned opposed minor detents 44-44 seat, with a snug fit, the latch members 24-24, as Figure 4A shows. The major detents may be termed inner detents because they are not recessed as deeply as the minor detents, which correspondingly may be termed outer detents. Each minor detent 44 is not concentric with the major detent 46 which it recesses, but is rearwardly offset, i.e. to the right in Figures 5A and 5B. Correspondingly, the latch axis 25 is offset rearwardly from the recess axis 45. This double-acting latch seat structure allows coupling tolerance to absorb high impulse, short duration non-pedalling road shocks and vibrations, while still maintaining a connection, between the shoe and pedal. Once the shock dissipates, the latch members 24 return to the state of lowest energy, which is being seated in the minor detents 44. This position provides an acute and solid interface between each latch member 24 and the steeply inclined surface adjacent the rim of a minor detent 44. It is more acute, and therefore more solid, than the interface of latch members 24 and the shallower inclined surface near the rim of the major detent 46. The two-stage structure is considered to be an optional feature of this invention deemed preferable for high performance cycling operation, e.g., road racing on cobblestones or other rough surface.

With further reference to Figures 3 through 5, the socket recess 32 has a seat portion 33 that couples with the latch element 20, and a guiding portion 38 that guides the latch element into and out of the seat portion. The recess seat portion 33 is configured to matingly receive the latch element block 22. It accordingly has a back wall 36 forming the back side of the recess 32. This wall abuts against the back wall of the block 22, i.e., against the thrusting surface 21 of the latch element, when the latch element is fully seated in the socket recess, as in Figure 5A, to transfer a rider's forward foot thrust to the cycling pedal 14. This thrust transfer is independent of the resilient latch and release mechanism. The latch-seating detents 46, 46 recess outwardly the sidewalls of the seat portion 33. The upper wall of the seat portion may, where desired, abuttingly engage the top of the latching element block 22 when the latch element is fully seated in the socket recess.

The recess guide portion 38 communicates with and extends forwardly from the seat portion 33, as Figures 4A and 5A-B show. The upper surface 40 of the guide portion is a downwardly-facing camming surface or ramp which extends forward from the front of the seat portion with decreasing depth in the recess. The latch element block 22 reacts with the camming surface 40 as a follower. The sidewalls 42, 42 of the guide portion flare outwardly apart from the recess seat portion to form a further funnel like structure for guiding the latch element into the seat portion. The flared sidewalls thus provide the guiding portion of the recess with progressively decreasing longitudinal width with increasing distance into the recess toward the seat portion.

Figures 4A and 4B also show that the sidewalls 35 of the socket seat portion 33 can be tilted or angled in the longitudinal direction (as illustrated by the angle phi in Figure 4A) and the vertical direction (as illustrated by the angle theta in Figure 4B) to optimize safety and control. Typically, the angles phi and theta will be small (e.g., plus or minus five or less degrees from perpendicular or normal to the latch axis 25). Variation in the angle theta will adjust the vertical force and roll moment necessary for release. Varying the angle phi will adjust the torque necessary for twist release and adjust the longitudinal shear interaction between the socket and latch elements. By controlling the relative tilting in both directions, the combination of twist torque and longitudinal shear relative to vertical force and roll moments necessary for release can also be controlled. The optimal angles for a particular application, which may differ for different walls, depend on the materials, the coefficients of friction of the contacting surfaces, the hardness of the elements, the depth of the recess 32, the modulus of elasticity of the springs 26, the preload on the springs, and the shape of the ends of the latch members 24.

As noted, the socket element 30 preferably is an integral part of the sole of a bicycling shoe. A cyclist wearing such a shoe may walk comfortably, and ride a bicycle having other pedals, because the socket element 30 is disposed fully within the sole 16 (Figure I). It does not extend beyond the surface of the sole, as do cleats, and therefore does not interfere with normal walking and other activities, and does not wear-out, like cleats do.

After mounting a bicycle 10 that is equipped with a latch element 20 on each pedal, the rider decides whether to couple the socket elements with the latch elements. When a cyclist choses to ride without this foot-to-pedal coupling, each pedal is flipped about the pedal axis 15 so that the planar surface 17 faces upwardly toward the shoe sole. Even in case the shoe has a socket element 30, it does not interfere with pedalling on this surface. Further, the latch element 20 is arranged on pedal 14 so that when the element 20 is facing away from the socket element 30 and the bicycle 10 is angulated during extreme cornering, the pedal 14 will scrape the ground before the element 20 scrapes. This enhances the durability of the socket element.

When the rider chooses to couple to the pedals, the normally weighted pedals in the preferred embodiment dispose each latch element 20 upward to face the shoe sole 16. The cyclist accordingly simply steps down on the pedal 14, preferably with the heel turned slightly outward, and the geometry of the recess 32, and in particular of the ramp 40 and flared sidewalls 42, translates the stepping down force into a combination of forces that guide the latch block 22 into the socket recess 32.

Figures 6A-6D show the seating and releasing of the latch block in the socket recess under different conditions, and Figure 7 shows the fully-seated condition. In particular, Figure 6A shows the latching and releasing operations when the latch element moves longitudinally into and out of the socket element. Figure 6B shows that a rider can latch the elements together or release them with a twisting movement of the foot, and Figure 6C shows the latching and releasing action with a roll movement of the foot. Figure 6D shows latching and releasing with the socket element moving vertically with respect to the latch element.

The relative ease of latching in each of the different directions which Figures 6A, 6B, 6C, and 6D illustrate may vary. It is deemed preferable that the latch element 20 and socket element 30 release under a twist motion (Figure 6B) at a level above normal riding conditions and yet well below rider discomfort, so that it is the easiest direction for intentional, self-actuated release, and conversely for latching.

As the latch block 22 enters the seat portion 33 (Figure 6B), the projecting latch members 24 engage in latch seats 34. When the latch and socket elements are fully coupled (Figure 7), the resilient bias of the latch members retains the block 22 within the recess 32. The normal outward resilient bias causes the members 24 to seat within the outer, minor detents 44 (Figure 5A).

The minor detents 44, disposed within recess 32 more rearwardly than the major detents 46, preferably seat the latch members with snug fit throughout the application of a typical pedalling load. When the latch and socket elements are thus coupled, the socket back wall 36 abuts against the forward thrust surface 21 of block 22, and aids in transferring forward thrust from a rider's foot to the pedals. When a large, non-forward or non-downward load causes the latch members to retract a small amount and unseats the latch block from the minor detents, the continued resilient bias in the inner, major detents 46 (Figure 5B) maintains a latched connection of the pedal and shoe, for continued riding control. In this manner, the latch block 22 remains held within seat portion 33 against the pedalling-level forces of vertical and longitudinal loads and of different rotational stresses. When these loads dissipate, the latch members again seek the state of lowest energy, and seat in the minor detents 44.

The latch and socket elements 20, 30 automatically release and separate under load levels greater than those employed in pedalling and yet lower than those likely to cause injury or other trauma to the rider. The release levels thus are well below the biomechanical failure thresholds of the foot-ankle-lower leg system along and about the vertical, longitudinal and lateral axes. A forward fall, for example, typically causes the cyclist's ankles to hyperextend and causes the foot to exert a shearing force on the pedal to effect release with the action which Figure 6A illustrates. A fall of a rider to the side typically causes a roll load higher than encountered in normal pedalling and which causes the shoe to separate from the pedal, as shown in Figure 6C. This release action occurs below the rider's biomechanical threshold and hence without causing tissue or bone to separate. Another fall can cause the rider to be thrown forward, in front of the bicycle. This fall can produce a vertical shear release as shown in Figure 6D. Other falls may cause the rider's body to twist relative to the bicycle at a level that is higher than that of typical pedalling, resulting in a twisting release as shown in Figure 6B.

Falls in bicycling are complex in direction, and can vary markedly. Therefore, it is a significant achievement of this invention to maximize the directions in which release can occur, without sacrificing the potential for pre-release. The equipment which the invention provides blocks two highest load directions, i.e. downward and forward, so that their bias does not cross-couple into the lower release limits of the primary release directions which Figures 6A, 6B, 6C and 6D illustrate, and hence does not cause pre-release. In addition, a cyclist can voluntarily, i.e. intentionally, decouple the shoe 18 from the pedal 14 by twisting the foot about the twist axis, i.e. with the action shown in Figure 6B. After any release, however, the latch element 20 and the socket element 30 are immediately ready for recoupling.

Note that the foregoing combination of cycling latch and socket element is driven to completely block separation and remain coupled by the downward and forward thrusts that are typical in cycle pedalling. Even slightly off-center forward shears are blocked, due to the wide width of the surface 21 on the pedal block 22 and of the recess wall 36 (Figures 5A and 5B). Pure lateral thrusts also do not cause release.

Figure 7 shows an optional modification of the recess wall 36 in which it has flat, coplanar end portions 36a, 36a, for abutting the latch block 22, and has a relieved, concave central portion 36b that accommodates dirt and other contaminants without interfering with the engagement and seating of latch member 20 in the socket member 30.

The structure and operation of other embodiments of latch element 20, shown in Figures 8-16, closely parallel the embodiments shown in Figures 1-7. Therefore, many details in the above description are not repeated below, and corresponding elements in Figures 8-16 are designated with the same reference numeral, followed by a superscript prime or double prime.

Figure 8 shows a latch element 20' that has a tensioning structure 50 for adjusting the resilient spring bias acting on the latch members 24', 24'. Specifically, the latch block 22' mounts a rotatable threaded stem 54 that carries an externally accessible knob 52. Turning the knob rotates the stem to move threaded non-rotating plates 56, 56 toward or away from each other along latch axis 25'. This movement adjustably changes the compression of the springs 26', each of which is compressed between a plate 56 and a latch member 24'. Also shown in Figure 8 are annular bushings 23', 23' disposed within block 22' and slidably fitting around the latch members 24', 24' to provide low-friction guides for the latch members. The bushings 23', 23' increase the resilient action and the shock absorbing properties of the latch element 20', while reducing wear. The bushings 23', 23' can be formed, for example, from oil-impregnated bronze or self-lubricating plastics. It should be clear that the tensioning means and bushing means described in connection with Figure 8 can be incorporated into other latch elements embodying the invention.

Figures 9A-D show a latch element 20'' that mounts to a pedal 14'' with two degrees of adjustment of the latch axis 25'' relative to the pedal axis 15''. The adjustably-mounted latch element 20'' has a latch block 22'' secured on a mounting disk 60 that mounts to the pedal 14''. The latch block 22'' carries resiliently-biased latch members 24'' 24'' that protrude outwardly from the block along a latch axis 25'', in much the same manner as in Figures 2 through 5.

The illustrated mounting disk 60 has a truncated circular periphery 62, and a flat upper surface 64 to which the latch block 22'' is secured, preferably centered on a diameter of the circular periphery. The disk 60 and latch block 22'' thus move as a unitary one-piece unit. The lower surface 66 of the mounting disk 60 is spherically rounded. The pedal 14'' has a mating spherically rounded mounting seat 68 recessing the pedal surface 19''.

The block-carrying disk 60 thus matingly seats in the pedal seat 68. The disk is normally seated with the upper surface 64 in a normally-horizontal plane, as appears in Figure 9A, so that the latch axis 25″ is parallel with the pedal axis 15″ in the plane of Figure 9D. However, to accommodate a different rider's foot posture, the disk can be rolled, as indicated with arrows 70, 70 in Figure 9A. This roll adjustment, shown in Figure 9B, provides a selected cant to the latch element 20″ and correspondingly to the disk surface 64 against which the rider's shoe sole presses.

With further reference to Figures 9A-D, the latch element 20″ can also be rotated in the plane of Figure 9D, i.e. about the twist axis, to offset the latch axis 25″ relative to the pedal axis 15″ in the plane of Figure 9D. This adjustment accommodates certain foot postures. The mating spherical disk surface 66 and the pedal seat 68 preferably are provided with abrasive finishes to enhance secure positioning of the latch element 20″ relative to the pedal 14″ with the foregoing selected orientation.

The adjustably-mounted latch element 20″ is secured in any of these positions by means of a mounting screw 28″ that seats in the pedal 14″ and threadably engages the latch block 22″. The screw 28″ passes through a slot 74 through the pedal 14 and elongated parallel to the axis 15″, i.e. along the lateral diameter of the spherical seat 68. The slot 74 has an arcuate recess 78 of increased width extending along the surface 17″ that provides a recessed surface for the head of the screw 28″. The inner, arcuate surface 79 of the recess of 78 is curved to correspond with the curvature of the disk surface 66 and of the seat 68, in the plane of Figures 9A and 9B. The disk 60 thus carries the mounting screw 28, and the screw slides along the slot 74, as in a guide, as the disk is canted to a desired orientation, as in Figure 9B, relative to the pedal 14″. Tightening the screw 28″ within the latch block 22″ and against the arcuate surface 79 clamps the disk 60 to the pedal 14″ in the selected cant position.

Figures 10A-C show another embodiment wherein a latch element 20″ can be rotated to offset the latch axis 25″ relative to the pedal axis 15″ to accommodate certain foot postures. The embodiment of Figures 10A-C also has low-friction bearings 82 which allow rotational relief for cyclists with knee problems, such as chondromalacia patellae. Twisting to exit, i.e. release, can still be accomplished since the rotational relief is limited. The slip bearings 82 can be omitted and, additionally, rotational relief can be overridden by sufficient tightening of the mechanism, thereby providing a stiff connection.

With reference to Figures 10A-C, the illustrated latch element 20″ has a spring block 22″ fixedly mounted upon an upper disk 80 for connection to pedal 14″. As can be seen in the exploded view of Figure 10B, pedal 14″ has a circular recess 84 in its upper surface 19″, into which the upper latch-mounting disk 80 fits. Optionally, a low-friction disk-shaped slip bearing 82, formed from a fluoropolymer material such as tetrafluoroethylene (Teflon) or the like, can be disposed within the recess 84 between disk 80 and the pedal 14″. As further shown in Figure 10B, a similarly shaped lower disk 90 and a lower disk-shaped bearing 82 can be disposed within another recess in the lower surface of pedal 14″.

The disks 80 and 90, upper and lower bearings 82, 82, and pedal 14″ are held together in the illustrated embodiment by a set of bolts 86 which pass through aligned holes 85 in each of the components and are secured together by flush-mounted nuts 88. The bolts 86 are accessible from the bottom of the pedal 14″ so that rotation can be adjusted, controlled or locked while the foot is still latched to the pedal. As shown in Figure 10B, the holes 85 in pedal 14″ preferably are arcuate slots which allow the user to adjust the orientation of the latch axis (or to allow limited rotation when slip bearings 82 are employed). A vernier scale 91 on the bottom of pedal 14″ can be used to precisely set and display the offset angle of the latch axis relative to the pedal axis. The lower disk 90 carries an index marker opposite the vernier scale.

Another preferred element is that the upper surface 19″ of pedal 14″, shown in Figures 10A and 10B, is coated with a replaceable polytetrafluoroethylene (Teflon) or similar low friction polymeric material layer 19A to maintain a selected low coefficient of friction with the cyclist's shoe. (The embodiment of Figures 2 and 3 is also illustrated as including such a low-friction layer 19A.)

Also shown in Figure 10A is a preferred bearing 140 which connects a pedal 14″, carrying the latch means of the present invention, to the bicycle crank-set 12. The bearing 140 includes a first, pedal-mounting collar-like stem 142 with external threads adapted to be screwed into a threaded recess in pedal 14″. The bearing also has a second crank-mounting stem 144 with external threads adapted to be screwed into the crank-set 12. In the illustrated embodiment a hex-nut opening 146 is formed in stem 144 to allow the cyclist to tighten the crank-mounting stem 144 to the crank 12. The pedal-mounting stem 142 rotates freely about the crank-mounting stem 144 by means of outer raceways 148a concentric with inner raceways 148b, and ball bearings 150 disposed therebetween.

Figure 11 shows that the invention can also be practiced with a resiliently deformable one-piece latch element 92 that has a pair of latch rods 92a, 92a secured to a pedal 94, in lieu of the spring-biased latch members 24 and latch block 22 of Figures 2 through 5 and other embodiments of Figures 8-10. Each illustrated latch rod 92a is curved through one 90° quadrant, as with an L-shape. A base end of the rod is fixed to the pedestal, suitably within a recess 96 in order to accommodate additional length of the rod 92a. The other, plunger end of the rod 92a projects outwardly, along a latch axis 98, in a manner similar to the previously-described embodiments. Also fixed to the pedal 94, within the space between the latch rods 92a, 92a along the latch axis 98, is an upwardly-projecting forward thrust block 100. The block is arranged to abut against the back wall 92 of the socket element with which the latch element 92 seats. Each latch rod 92a has sufficient resilience to couple with and release from a socket element such as the socket element 30 described above, and the forward thrust block 100 aids in transferring forward thrust from a rider's foot to the pedal. The action of the resilient latch rods 92a, 92a of Figure 11, in coupling with a latching socket element and in releasing from such a socket element, may be similar to that described above with regard to the constructions of Figures 1 through 7.

Figure 12 illustrates an embodiment of the socket member of the invention which disposes of dirt and debris which might otherwise accumulate at the detent-latch member interface. Shown in Figure 12 is a shoe sole 16 carrying a socket recess 30 having seats 34, 34 adapted to receive a latch member as described in connection with other embodiments. However, in the embodiment of Figure 12, the sole 16 further includes two ports 154, 154 which provide passageways from the socket recess 30 to the outer side surfaces of the sole 16. The ports 154, 154 allow contaminants to be forced out of the sole 16 rather than accumulate around the release mechanism. In one preferred embodiment, the size of the ports is roughly one-third the diameter of the detents, and the elongations of the ports flare backwards, as shown, to reduce entry of water and dirt into the recess 30.

Figure 13 shows a multi-element sole 16 for a cyclist's shoe 18 which consists of a hard, wear-resistant socket liner 104 and a more flexible and resilient sole plate 106 to enhance walking comfort. The sole can be constructed by first molding the socket liner 104 and then molding or otherwise joining a more flexible sole plate 106 to the liner. In one preferred embodiment, the socket liner 104 is formed from a urethane polymer such as cyanaprene, made by American Cyanamid, or other synthetic resin or even be formed of a metal which has high tear strength. The sole plate 106, which provides a load-distributing function, can be formed from conventional materials used for athletic shoe soles such as PEBAX, manufactured by ATO Chemical Company. The illustrated embodiment has a third sole element, namely a cushion 105, of a low-density, highly flexible filler material such as ethlene vinyl acetate. To provide a strong interlock between the cushion material 105 and the sole plate 106, a tongue-and-groove type interface 107, as shown in Figure 13, can be employed.

Figures 14A and 14B illustrate another feature of the present invention in which a cinch strap 108 is provided to reinforce the bond between the upper portion of the shoe 18 and the sole 16, at the region above the ball of the foot, thereby giving powerful forefoot support. This type of shoe reinforcement is deemed highly desirable to attain full benefit of the cycling performance which the invention makes possible. As shown in detail in Figure 14B, the cinch strap 108 includes a first strap portion 110 embedded or otherwise permanently secured to one side of the sole 16 and a second strap portion 114 similarly secured to the other side of the sole. The second strap portion 114 is wrapped around the upper portion of the shoe 18 and secured to the first strap 110 portion by a buckle 112. In the illustrated embodiment, the first strap portion 110 is permanently fastened to the buckle 112, while the tightness of the second strap portion 114 is adjusted by a hook and loop (Velcro-type) or like fastener.

A pedal adapting apparatus 120 is shown in Figure 15 to permit the use of the invention with a conventional pedal 14a. The pedal adapting apparatus 120 includes a mounting plate 122 carrying a disk 80'' upon which is disposed a latch element 20' having a spring block 22' and latch members 24', 24'. The disk 80' and latch element 20' can be similar in construction, for example, to the apparatus of Figures 10A-C and can further optionally include bearings which allow limited rotational slippage or selective adjustment and locking of the latch axis as described above. The pedal adapting apparatus 120 also includes a flange 124 adjustably connected to the mounting plate 122 by bolts 123, as shown, or similar fastening mechanisms to accommodate pedals of varying widths. The mounting plate 122 and flange 124 further include side holes; bolts 126 pass through these side holes and aligned holes in the conventional pedal 14a (washers 127 may also be employed) to secure the adapting apparatus to the pedal. Other fastening, clamping or clipping mechanisms can be used interchangeably with the illustrated nuts and bolts to secure the apparatus 120. The mounting plate 122 can also include a low-friction upper surface similar to that shown in Figure 10B.

Figure 16 illustrates a shoe-adapting apparatus 130 to permit the use of the invention with a conventional shoe. The shoe adapting apparatus 130 consists of a sole plate 132 in which is formed a socket element 30 having seats 34 which are adapted to receive the latch element of the invention. The socket element is similar in construction to those described in connection with Figures 1-7 above. The shoe adapting apparatus also includes one or more straps 134 to secure the plate 132 to a conventional shoe. A heel strap 134A is also employed. The straps 134 can, for example, be similar in construction to the adjustable cinch strap described above in connection with Figure 14B.

**Claims**

1. Pedalling apparatus for releasably and replaceably coupling a rider's foot to a pedal arranged to revolve about a pedal axis in response to pedalling loads, said pedalling apparatus having

latch means (20; 92) with first and second latch members (24; 24'; 24''; 92a) directed along a latch axis (25; 25'; 25''; 98),

at least one said latch member being resiliently biased relatively to the other along said latch axis, and

latch receiving means (30) arranged on foot apparel for wearing on a rider's foot and having first and second latch seats (34) for coupling said latch members against the action of said resilient bias and for releasing said latch members against the action of said resilient bias upon twisting of the latch receiving means, characterised in that

the latch means (20) projects upwardly on the upper side of said pedal,

in that said latch seats (34) are formed in a latch means receiving socket (30) recessed into a sole of the rider's foot apparel,

in that said latch axis (25; 25'; 25''; 98) is longitudinal with said pedal axis (15; 15'; 15''), and

in that said latch seats (34) are adapted releasably to couple said latch members (24; 24'; 24''; 92a) against the action of said resilient bias whereby said latch receiving means (30) resists unseating of said latch means (20; 92) coupled therewith and transmits thereto a cycling thrust in response to said pedalling loads, and said latch means (20; 92) unseats resiliently from said latch receiving means in response to selected non-pedalling upward and rearward loads, including such loads as are intentionally selected by the rider, as well as to said twisting of the latch receiving means (30).

2. Bicycle pedalling apparatus according to claim 1, comprising the further improvement wherein said socket recess (30) has

a latch-seating portion (33) which includes said first and second latch seats and is arranged for receiving said latch means, and

a front guiding portion (38) extending forwardly of said seat portion (33) for guiding said latch means (20; 92) into and out of said seat portion.

3. Bicycle pedalling apparatus according to claim 2, comprising the further improvement wherein said socket recess (30) has a downwardly projecting back wall portion (36; 92) rearward of said seating portion (33) for abutment against forward thrust means (22; 22'; 22''; 92) of latch means (20; 92) seated in said socket recess.

4. Bicycle pedalling apparatus according to claim 2 or 3, having the further improvements wherein

said latch means (20; 92) has upwardly-facing follower means (22; 22'; 22''; 92), and

said front guiding portion (38) has downwardly facing camming means (40) extending longitudinally along said front guiding portion and providing said recess with progressive depth from the front thereof to said seating portion (33).

5. Bicycle pedalling apparatus according to any preceding claim having the further improvement wherein said latch members (24; 24'; 24''; 92a) comprise first and second resilient projections aligned and resiliently-deflectable along said latch axis (25; 25'; 25''; 98).

6. Bicycle pedalling apparatus according to claim 1, having the further improvement comprising mounting means (60) for adjustably mounting said latch means (20) to said pedal with selective positioning of said latch axis (25'') longitudinally of said pedal axis (15'').

7. Bicycle pedalling apparatus according to claim 1, having the further improvement wherein said latch receiving means includes a shoe (18) having a sole forming said latch means receiving socket recess (30) therein.

8. Bicycle pedalling apparatus according to any preceding claim, having the further improvement wherein at least one of said latch seats (34) comprises

first detent means (44) arranged to seat one said latch member (24; 24'; 24''; 92a) with a first resilient bias, and

second detent means (46) communicating with said first detent means (44) for seating said one latch member (24; 24'; 24''; 92a) with a second, greater resilient bias.

9. Bicycle pedalling apparatus according to any one of claims 1 to 7, having the further improvement wherein said latch seats (34) have means (44, 46) for providing first and second latching engagements of a latch member (24; 24'; 24''; 92a) with different resilient bias.

10. Bicycle pedalling apparatus according to claim 1, having the further improvement comprising bearing means (60; 80, 82, 90) permitting limited rotation of said latch axis (25'') relative to said pedal axis.

11. Bicycle pedalling apparatus according to any preceding claim wherein said latch means receiving socket recess (30) further includes first and second opposing side walls (42), disposed at selected angles relative to said latch axis (25; 25'; 25''; 98) to control the releasing of said latch means (20; 92).

12. Bicycle pedalling apparatus according to claim 1 wherein said latch means receiving socket recess (30) further includes at least one port (154) communicating between said recess and the outside of said latch receiving means to transport debris and avoid fouling of said apparatus.

13. Cycling apparatus for releasably and replaceably coupling a cyclist's foot to a latching pedal that revolves about a normally-horizontal pedal axis and that has latch means with first and second latch members directed along a latch axis, at least one said latch member being resiliently biased relative to the other along said latch axis, said apparatus comprising

latch receiving means (30) with first and second latch seats (34) for couplingly seating said latch members against the action of said resilient bias and for releasing said latch members against the action of said resilient bias upon twisting of the latch receiving means (30) characterised in that

said latch seats (34) are axially aligned with a latch axis (25; 25'; 25''; 98) longitudinal with the pedal axis (15; 15'; 15''),

in that said latch seats (34) are formed in a latch means-receiving socket (30) recessed into a sole portion of cyclist's foot apparel (18; 130), and

in that said latch seats (34) are adapted releasably to couple said latch members against the action of said resilient bias whereby said latch receiving means (30) resists unseating of said latch means coupled therewith and transmits thereto a cycling thrust in response to said pedalling loads, and said latch means unseats resiliently from said latch receiving means (30) in response to selected non-pedalling upward and rearward loads, including such loads as are intentionally selected by the cyclist, as well as to said twisting of the latch receiving means (30).

14. Cycling pedal apparatus for releasably and replaceably coupling a cycle pedal to a cyclist's foot carried socket element having latch. receiving means with first and second latch seats, said pedal being arranged to revolve about a normally-horizontal pedal axis (15; 15'; 15''), said apparatus comprising

latch means (20; 92) with first and second latch members (24; 24'; 24''; 92a) directed along a latch axis (25; 25'; 25''; 98),

at least one said latch member being resiliently biased relative to the other along said latch axis to couplingly seat said latch members in said latch seats against the action of said resilient bias and to resiliently release said latch members against the actions of said resilient bias upon twisting of the latch receiving means characterised in that

said latch means (20; 92) projects upwardly on the upper side of the pedal with said latch axis (25; 25'; 25''; 98) longitudinal with said pedal axis (15; 15'; 15''), whereby said latch members (24; 24'; 24''; 92a) couple with said foot carried element to transmit cycling thrust in response to pedalling loads and unseat resiliently from said foot carried element in response to selected non-pedalling upward and rearward loads, including such loads as are intentionally selected by the cyclist, as well as to said twisting of the latch receiving means.

**Patentansprüche**

1. Pedalvorrichtung zum lös- und rückstellbaren Kuppeln des Fußes eines Fahrers mit einem Pedal in einer Anordnung zum Umlaufen um eine Pedalachse infolge von Pedalbelastungen, wobei die Pedalvorrichtung

eine Rastvorrichtung (20; 92) mit einem ersten und einem zweiten Rastglied (24; 24'; 24''; 92a) aufweist, die entlang einer Rastachse (25; 25'; 25''; 98) gerichtet sind,

zumindest eines der Rastglieder relativ zu dem anderen entlang der Rastachse federnd beaufschlagt ist und

eine Rastmittelaufnahmeeinrichtung (30) vorgesehen ist, die an Fußbekleidung angeordnet ist, um am Fuß eines Fahrers getragen zu werden, und einen ersten und einen zweiten Rastsitz (34) zum Kuppeln der Rastglieder entgegen der Wirkung der federnden Beaufschlagung und zum Lösen der Rastglieder entgegen der federnden Beaufschlagung beim Verdrehen der Rastmittelaufnahmeeinrichtung aufweist, dadurch gekennzeichnet, daß

die Rastvorrichtung (20) auf der Oberseite des Pedals nach oben vorsteht,

daß die Rastsitze (34) in einer in eine Sohle der Fußbekleidung des Fahrers eingeformten Rastmittelaufnahmehülse (30) ausgebildet sind,

daß die Rastachse (25; 25'; 25''; 98) längs der Pedalachse (15; 15'; 15'') verläuft und

daß die Rastsitze (34) geeignet sind, die Rastglieder (24; 24'; 24''; 92a) lösbar entgegen der Wirkung der federnden Beaufschlagung zu kuppeln, wodurch die Rastmittelaufnahmeeinrichtung (30) einem Lösen der mit ihr gekuppelten Rastvorrichtung (20; 92) entgegenwirkt sowie auf diese einen Radfahrschub infolge der Pedalbelastungen überträgt und die Rastvorrichtung (20; 92) sich von der Rastmittelaufnahmeeinrichtung infolge nicht-tretender Aufwärts-und Rückwärtsbelastungen einschließlich solcher Belastungen, wie sie absichtlich vom Fahrer gewählt werden, sowie infolge des Verdrehens der Rastmittelaufnahmeeinrichtung (30) federnd löst.

2. Fahrradpedalvorrichtung nach Anspruch 1, mit der weiteren Verbesserung, daß die Hülsenausnehmung (30)

einen Rastmittelsitzbereich (33), der den ersten und den zweiten Rastmittelsitz umfaßt und zur Aufnahme der Rastvorrichtung eingerichtet ist, und

einen vorderen Führungsbereich (38) aufweist, der sich vom Sitzbereich (33) zum Führen der Rastvorrichtung (20; 92) in den Sitzbereich hinein und aus diesem heraus nach vorn erstreckt.

3. Fahrradpedalvorrichtung nach Anspruch 2, mit der weiteren Verbesserung, daß die Tülsenausnehmung (30) einen nach unten vorstehenden Rückwandbereich (36; 92) rückwärts von dem Sitzbereich (33) für eine Anlage an vorderen Schubmitteln (22; 22'; 22''; 92) der in der Hülsenausnehmung sitzenden Rastvorrichtung (20; 92) aufweist.

4. Fahrradpedalvorrichtung nach Anspruch 2 oder 3, mit den weiteren Verbesserungen, daß

die Rastvorrichtung (20; 92) eine nach oben weisende Mitnehmereinrichtung (22; 22'; 22''; 92) besitzt und

der vordere Führungsbereich (38) eine nach unten weisende Leiteinrichtung (40) aufweist, die sich in Längsrichtung entlang dem vorderen Führungsbereich erstreckt und der Ausnehmung eine fortschreitende Tiefe von deren Vorderseite zum Sitzbereich (33) hin vermittelt.

5. Fahrradpedalvorrichtung nach einem beliebigen vorhergehenden Anspruch mit der weiteren Verbesserung, daß die Rastglieder (24; 24'; 24''; 92a) erste und zweite federnde Vorsprünge aufweisen, die entlang der Rastachse (25; 25' 25''; 98) ausgerichtet und federnd ablenkbar sind.

6. Fahrradpedalvorrichtung nach Anspruch 1, mit der weiteren Verbesserung, daß Montagemittel (60) zur einstellbaren Befestigung der Rastvorrichtung (20) am Pedal mit einer gewählten Stellung der Rastachse (25'') längs der Pedalachse (15'') vorgesehen ist.

7. Fahrradpedalvorrichtung nach Anspruch 1, mit der weiteren Verbesserung, daß die Rastmittelaufnahmeeinrichtung einen Schuh (18) mit einer Sohle aufweist, in der die die Rastvorrichtung aufnehmende Hülsenausnehmung (30) ausgebildet ist.

8. Fahrradpedalvorrichtung nach einem beliebigen vorhergehenden Anspruch, mit der weiteren Verbesserung, daß zumindest einer der Rastsitze (34)

einen ersten Rastpunkt (44) in einer Anordnung zum Aufsitzen eines Rastgliedes (24; 24′ 24″; 92a) mit einer ersten federnden Beaufschlagung und

einen zweiten Rastpunkt (46) umfaßt, der mit dem ersten Rastpunkt (44) für ein Aufsitzen des einen Rastglieds (24; 24′ 24″; 92a) mit einer zweiten, größeren federnden Beaufschlagung in Verbindung steht.

9. Fahrradpedalvorrichtung nach einem der Ansprüche 1 bis 7, mit der weiteren Verbesserung, daß die Rastsitze (34) Mittel (44, 46) zum Herbeiführen eines ersten und eines zweiten Rasteingriffs eines Rastglieds (24; 24′; 24″; 92a) mit unterschiedlicher federnder Beaufschlagung aufweisen.

10. Fahrradpedalvorrichtung nach Anspruch 1, mit der weiteren Verbesserung, daß eine Lagereinrichtung (60; 80, 82, 90) vorgesehen ist, die eine begrenzte Drehung der Rastachse (25″) relativ zur Pedalachse zuläßt.

11. Fahrradpedalvorrichtung nach einem beliebigen vorhergehenden Anspruch, wobei die die Rastvorrichtung aufnehmende Hülsenausnehmung (30) ferner eine erste und eine zweite Seitenwand (42) aufweist, die einander gegenüberliegen und mit einem ausgewählten Winkel in bezug auf die Rastachse (25; 25′; 25″; 98) zur Steuerung des Lösens der Rastvorrichtung (20; 92) angeordnet sind.

12. Fahrradpedalvorrichtung nach Anspruch 1, wobei die die Rastvorrichtung aufnehmende Hülsenausnehmung (30) ferner zumindest eine Öffnung (154) aufweist, die zwischen der Ausnehmung und der Außenseite der Rastmittelaufnahmeeinrichtung eine Verbindung zum Transport von Verunreinigungen und zur Vermeidung einer Verschmutzung der Vorrichtung herstellt.

13. Radfahrvorrichtung zum lös- und rückstellbaren Kuppeln des Fußes eines Radfahrers mit einem Rastpedal, das um eine normalerweise horizontale Pedalachse umläuft und eine Rastvorrichtung mit einem ersten und einem zweiten Rastglied aufweist, die entlang einer Rastachse gerichtet sind und von denen zumindest ein Rastglied in bezug auf das andere entlang der Rastachse federnd beaufschlagt ist, wobei die Vorrichtung

eine Rastmittelaufnahmeeinrichtung (30) mit einem ersten und einem zweiten Sitz (34) zum kuppelnden Aufsetzen der Rastglieder gegen die Wirkung der federnden Beaufschlagung und zum Lösen der Rastglieder gegen die Wirkung der federnden Beaufschlagung bei einem Verdrehen der Rastmittelaufnahmeeinrichtung (30) umfaßt, dadurch gekennzeichnet, daß

die Rastsitze (34) axial mit einer Rastachse (25;

25′; 25″; 98) längs der Pedalachse (15; 15′; 15″) ausgerichtet sind,

daß die Rastsitze (34) in einer die Rastvorrichtung aufnehmenden Hülse (30) ausgebildet sind, die in einen Sohlenbereich einer Fußbekleidung (18; 130) des Radfahrers eingeformt ist, und

daß die Rastsitze (34) geeignet sind, die Rastglieder lösbar entgegen der Wirkung der federnden Beaufschlagung zu kuppeln, wodurch die Rastmittelaufnahmeeinrichtung (30) einem Lösen der mit ihr gekuppelten Rastvorrichtung entgegenwirkt sowie auf diese einen Radfahrschub infolge der Pedalbelastungen überträgt und die Rastvorrichtung sich von der Rastmittelaufnahmeeinrichtung (30) infolge nicht-tretender Aufwärts- und Rückwärtsbelastungen einschließlich solcher Belastungen, wie sie absichtlich vom Radfahrer gewählt werden, sowie infolge des Verdrehens der Rastmittelaufnahmeeinrichtung (30) federnd löst.

14. Radfahrpedalvorrichtung zum lös- und rückstellbaren Kuppeln eines Fahrradpedals mit einem von einem Fuß des Radfahrers getragenen Hülsenelement mit einer Rastmittelaufnahmeeinrichtung mit einem ersten und einem zweiten Rastsitz, wobei das Pedal eine Anordnung zum Umlaufen um eine normalerweise horizontale Pedalachse (15; 15′; 15″) besitzt und wobei die Vorrichtung

eine Rastvorrichtung (20; 92) mit einem ersten und einem zweiten Rastglied (24; 24′; 24″; 92a), die entlang einer Rastachse (25; 25′; 25″; 98) gerichtet sind, umfaßt und

zumindest eines der Rastglieder relativ zu dem anderen entlang der Rastachse federnd beaufschlagt ist, um die Rastglieder in die Rastsitze gegen die Wirkung der federnden Beaufschlagung kuppelnd einzusetzen und die Rastglieder gegen die Wirkung der federnden Beaufschlagung bei einem Verdrehen der Rastmittelaufnahmeeinrichtung federnd zu lösen, dadurch gekennzeichnet, daß

die Rastvorrichtung (20; 92) auf der Oberseite des Pedals mit längs der Pedalachse (15; 15′; 15″) verlaufender Rastachse (25; 25′; 25″; 98) nach oben vorsteht, wodurch die Rastglieder (24; 24′; 24″; 92a) mit dem vom Fuß getragenen Element gekuppelt werden, um einen Radfahrschub infolge von Pedalbelastungen zu übertragen, und sich von dem vom Fuß getragenen Element infolge von ausgewählten nicht-tretenden Aufwärts- und Rückwärtsbelastungen einschließlich solcher Belastungen, wie sie absichtlich vom Radfahrer gewählt werden, wie auch infolge des Verdrehens der Rastmittelaufnahmeeinrichtung federnd lösen.

**Revendications**

1. Pédalier pour accoupler de façon détachable et remplaçable le pied d'un cycliste à une pédale disposée pour tourner autour d'un axe de pédale en réponse à des forces de pédalage, ledit pédalier comprenant

un moyen de verrouillage (20; 92) ayant des premier et second éléments de verrouillage (24; 24'; 24''; 92a) dirigés le long d'un axe de verrouillage (25; 25'; 25''; 98),

au moins un desdits éléments de verrouillage étant chargé initialement de façon élastique par rapport à l'autre le long dudit axe de verrouillage, et

un moyen de verrouillage récepteur (30) disposé sur un vêtement pour pied destiné à être porté par le pied d'un cycliste et ayant des premier et second sièges de verrouillage (34) pour accoupler lesdits éléments de verrouillage contre l'action de ladite charge initiale élastique et pour libérer lesdits éléments de verrouillage contre l'action de ladite charge initiale élastique après tordage du moyen de verrouillage récepteur, caractérisé en ce que

le moyen de verrouillage (20) s'élève vers le haut sur la face supérieure de la pédale,

les sièges de verrouillage (34) sont formés dans un socle (30) du moyen de verrouillage récepteur travaillé en retrait dans la semelle du vêtement pour pied du cycliste,

l'axe de verrouillage (25; 25'; 25''; 98) s'étend en direction longitudinale avec l'axe (15; 15'; 15'') de la pédale, et

les sièges de verrouillage (34) sont adaptés pour accoupler de façon détachable lesdits éléments de verrouillage (24; 24'; 24''; 92a) contre l'action de la charge initiale élastique de sorte que le moyen de verrouillage récepteur (30) résiste au délogement du moyen de verrouillage (20; 92) y accouplé et y transmette une poussée réitérative en réponse auxdits forces de pédalage, et que ledit moyen de verrouillage (20; 92) se déloge de façon élastique dudit moyen de verrouillage récepteur en réponse à des charges choisies non pédalantes vers le haut et vers l'arrière, y compris les charges qui sont choisies avec intention par le cycliste, ainsi qu'en réponse au tordage du moyen de verrouillage récepteur (30).

2. Pédalier de bicyclette selon la revendication 1, comprenant le perfectionnement supplémentaire selon lequel le socle en retrait (30) comprend

une partie siège de verrouillage (33) qui comprend des premier et second sièges de verrouillage et est disposée pour recevoir ledit moyen de verrouillage, et

une partie de guidage frontale (38) s'étendant vers l'avant de la partie siège (33) pour guider le moyen de verrouillage (20; 92) dans et hors de la partie siège.

3. Pédalier de bicyclette selon la revendication 2, comprenant le perfectionnement supplémentaire selon lequel le socle en retrait (30) a une partie de paroi arrière (36; 92) s'étendant vers l'arrière derrière ladite partie siège (33) pour toucher contre un moyen de poussée antérieur (22; 22'; 22''; 92) du moyen de verrouillage (20; 92) positionné dans ledit socle en retrait.

4. Pédalier de bicyclette selon la revendication 2 ou 3, ayant les perfectionnements supplémentaires selon lesquelles

le moyen de verrouillage (20; 92) a un moyen suiveur de came (22; 22'; 22''; 92) tourné vers le haut, et

ladite partie de guidage frontale (38) a des moyens de came (42) tournés vers le bas et s'étendant longitudinalement le long de la partie de guidage frontale et donnant audit socle en retrait une profondeur progressive à partir de sa partie frontale vers la partie siège (33).

5. Pédalier de bicyclette selon l'une quelconque des revendications précédentes ayant le perfectionnement supplémentaire selon lequel le moyen de verrouillage (24; 24'; 24''; 92a) a des première et seconde projections élastiques alignées et pouvant être défléchies de façon élastique le long de l'axe de verrouillage (25; 25'; 25''; 98).

6. Pédalier de bicyclette selon la revendication 1, ayant le perfectionnement supplémentaire comprenant des moyens de montage (60) pour monter ledit moyen de verrouillage (20) de façon ajustable à ladite pédale pour positionner ledit axe de verrouillage (25'') de façon sélective en direction longitudinale de l'axe de pédale (15'').

7. Pédalier de bicyclette selon la revendication 1, ayant le perfectionnement supplémentaire selon lequel ledit moyen de verrouillage récepteur comprend un soulier (18) ayant une semelle formant ledit socle en retrait (30) recevant ledit moyen de verrouillage.

8. Pédalier de bicyclette selon l'une quelconque des revendications précédentes, ayant le perfectionnement supplémentaire selon lequel au moins un des sièges de verrouillage (34) comprend

un premier moyen de maintien (44) disposé pour loger un des éléments de verrouillage (24; 24'; 24''; 92a) avec une première charge initiale élastique; et

un second moyen de maintien (46) communiquant avec ledit premier moyen de maintien (44) pour loger ledit élément de verrouillage (24; 24'; 24''; 92a) avec une seconde charge initiale élastique plus grande.

9. Pédalier de bicyclette selon l'une quelconque des revendications 1 à 7, ayant le perfectionnement supplémentaire selon lequel les sièges de verrouillage (34) ont des moyens (44, 46) pour fournir des premier et second engagements de verrouillage d'un élément de verrouillage (24; 24'; 24''; 92a) avec des charges initiales élastiques différentes.

10. Pédalier de bicyclette selon la revendication 1, ayant le perfectionnement supplémentaire comprenant des moyens palier (60; 80, 82, 90) permettant une rotation limitée dudit axe de verrouillage (25'') par rapport à l'axe de pédale.

11. Pédalier de bicyclette selon l'une quelconque des revendications précédentes, dans lequel le socle en retrait (30) recevant ledit moyen de verrouillage comprend en outre des première et seconde parois latérales opposées (42) disposées sous des angles choisis par rapport audit axe de verrouillage (25; 25'; 25''; 98) pour contrôler le délogement du moyen de verrouillage (20; 92).

12. Pédalier de bicyclette selon la revendication 1, dans lequel ledit socle en retrait (30) recevant ledit moyen de verrouillage comprend en outre au moins un passage (154) communiquant entre le socle en retrait et l'extérieur du moyen de verrouillage récepteur pour transporter des débris et éviter l'encreassement du pédalier.

13. Appareil cycliste pour accoupler de façon détachable et remplaçable le pied de cycliste à une pédale d'accrochage qui tourne autour d'un axe de pédale normalement horizontal et qui a un dispositif de verrouillage avec des premier et second éléments de verrouillage dirigés le long d'un axe de verrouillage, au moins un desdits éléments de verrouillage étant charge initialement de façon élastique par rapport à l'autre le long dudit axe de verrouillage, ledit appareil comprenant

un moyen de verrouillage récepteur (30) ayant des premier et second sièges de verrouillage (36) pour loger par accouplement lesdits éléments de verrouillage contre l'action de ladite charge initiale élastique et pour déloger lesdits éléments de verrouillage contre l'action de la charge initiale élastique après tordage du moyen de verrouillage récepteur (30), caractérisé en ce que

les sièges de verrouillage (34) sont alignés axialement avec l'axe de verrouillage (25; 25'; 25''; 98) longitudinalement avec l'axe de pédale (15; 15'; 15''),

les sièges de verrouillage (34) sont formés dans un socle (30) recevant le moyen de verrouillage et travaillé en retrait dans la partie de semelle du vêtement pour pied (18; 130) de cycliste, et

les sièges de verrouillage (34) sont adaptés pour accoupler de façon détachable les éléments de verrouillage contre l'action de la charge initiale élastique de sorte que le moyen de verrouillage récepteur (30) résiste au délogement du moyen de verrouillage y accouplé et y transmet une poussée réitérative en réponse aux charges pédalantes et que le moyen de verrouillage se déloge de façon élastique du moyen de verrouillage récepteur (30) en réponse à des charges choisies non pédalantes dirigées vers le haut et l'arrière, y compris ces charges qui sont choisies avec intention par le cycliste, ainsi qu'en réponse audit tordage du moyen de verrouillage récepteur (30).

14. Pédalier de bicyclette pour accoupler de façon détachable et remplaçable une pédale de bicyclette à un élément de socle portée par le pied d'un cycliste et ayant un moyen de verrouillage réceptuer avec des premier et second sièges de verrouillage, ladite pédale étant arrangée pour tourner autour d'un axe de pédale (15; 15'; 15'') normalement horizontal, ledit pédalier comprenant

un moyen de verrouillage (20; 92) avec des premier et second éléments de verrouillage (24; 24'; 24''; 92a) dirigé le long d'un axe de verrouillage (25; 25'; 25''; 98),

au moins un desdits éléments de verrouillage étant chargé initialement de façon élastique par rapport à l'autre le long d'un axe de verrouillage pour loger par accouplement ledit élément de verrouillage dans lesdits sièges de verrouillage contre l'action de ladite charge sièges de verrouillage contre l'action de ladite charge initiale élastique et pour déloger de façon élastique ledit élément de verrouillage contre l'action de la charge initiale élastique après tordage du moyen de verrouillage récepteur, caractérisé en ce que

le moyen de verrouillage (20; 92) s'élève vers le haut sur la face supérieure de la pédale avec ledit axe de verrouillage (25; 25'; 25''; 98) disposé longitudinalement à l'axe de pédale (15; 15'; 15''), de sorte que l'élément de verrouillage (24; 24'; 24''; 92a) s'accouple avec l'élément porté par le pied pour transmettre une poussée réitérative en réponse à des charges pédalantes et se déloger de façon élastique de l'élément porté par le pied en réponse à des charges choisies non pédalantes dirigées vers le haut et l'arrière, y compris ces charges qui sont choisies avec intention par le cycliste, ainsi qu'en réponse audit tordage du moyen de verrouillage récepteur.

*FIG. 1*

*FIG. 2*

1

FIG. 3

FIG. 4A

FIG. 4B

FIG. 5A

FIG. 5B

FIG. 6A

FIG. 6B

FIG. 6C

FIG. 6D

FIG. 7

FIG. 8

FIG. 9A

FIG. 9B

FIG. 9C

4

FIG. 9D

FIG. 10 A

FIG. 10 C

5

FIG.
10B

**FIG. 11**

**FIG. 12**

**FIG. 13**

7

FIG. 14 B

FIG. 14 A

FIG. 16

*FIG. 15*